# EUROPEAN PATENT SPECIFICATION

(11) **EP 1 643 498 B1**
(45) Date of publication and mention of the grant of the patent: **17.09.2008**
(21) Application number: 05256111.5
(22) Date of filing: 29.09.2005
(51) Int. Cl.: G11B 7/258, G11B 7/247

(54) **Optical information recording medium**
Optisches Datenaufzeichnungsmedium
Support d'enrégistrement optique des données

(30) Priority: 30.09.2004 JP 2004286295
(43) Date of publication of application: 05.04.2006
(73) Proprietor: TAIYO YUDEN CO., LTD., Tokyo 110-0005 (JP)
(72) Inventor: Hara, Fumi, Taito-ku Tokyo 110-0005 (JP); Ishibashi, Sachiko, Taito-ku Tokyo 110-0005 (JP); Satoh, Masashi, Taito-ku Tokyo 110-0005 (JP); Fujii, Toru, Taito-ku Tokyo 110-0005 (JP); Arai, Yuji, Taito-ku Tokyo 110-0005 (JP)
(74) Representative: Kirsch, Susan Edith

(56) References cited:
- EP-A- 1 690 958
- JP-A- 55 045 121
- US-A- 5 075 145
- US-A1- 2004 161 701
- US-B1- 6 475 589

## Description

### BACKGROUND OF THE INVENTION

### 1. Field of the Invention

The present invention concerns a write-once type optical information recording medium having excellent recording characteristics.

### 2. Description of the Related Art

Write-once type optical information recording media, such as bonded optical disks have been well known including, those formed by opposing, for example, an optical disk having, on a transparent substrate, a layered structure contains a dye recording layer, a reflective layer and, optionally, a protective layer and another optical disk of an identical layered structure or a different layered structure at least containing the dye recording layer and bonding them to each other by way of an adhesive, with the layered structures thereof being opposed to each other, or those in which a pair of transparent substrates per se are directly opposed and bonded to each other by way of an adhesive, in which information can be recorded or reproduced by applying a light of a semiconductor laser at a waveform of from 400 to 670 nm for CVD or applying a light of a semiconductor laser at a longer wavelength for CD-R on the side of the other main surface as described in JP-A No. 9-69239.

US-A-5 075 145 describes an optical recording medium comprising a substrate and a metal reflective layer provided on the substrate, in which the metal reflective layer comprises an alloy of Al and at least one metal selected from the elements of Groups Ib, IIa, IVb, Vb, VIb. IIIa, IVa and Va of the Periodic Table. When the metal reflective layer contains at least one element selected from the group consisting of Zn, In, Si, Pb, P, Sb and Bi, preferably Zn, In and P, the proportion of the element is generally 0.3 to 15 atom %, and preferably 1.0 to 10 atom %.

US 2004/161701 A1 discloses novel trimethine cyanine dyes, light absorbents, light-resistant improvers, and optical recording media which comprise the trimethine cyanine dyes. The cyanine dyes are said to exert satisfactory solubility and heat resistance when used in high-density optical recording media.

US-B1-6 475 589 describes an optical disc that comprises: at least two plastic substrates comprising a bonding layer and a data layer disposed therebetween, wherein at least one of the substrates is a read side substrate comprising greater than or equal to about 0.05 wt % colorant, based upon the total weight of the read side substrate, and wherein the read side substrate has a UV Bonding Index of greater than or equal to about 0.5.

### SUMMARY OF THE INVENTION

Compared with a reflective layer only consisting of Ag known reflective layer comprising silver alloys such as Ag-Cu-In or Ag-Cu-Zn as the reflective layer comprising the silver alloy described in JP-A No. 9-69239 can outstandingly increase the resistance to oxidation and corrosion and are hardened to prevent the flow of the dye recording layer disposed therebelow due to the effect of the additive elements, and can ensure high reliability being excellent in a so-called high temperature and high humidity resistance test reliability in that the recording/reproducing performance is not degraded even put under a high temperature and high humidity circumstance as an optical disk. On the other hand, however, the heat conductivity and the reflectance are lowered and it is difficult, in this regard, to improve the recording/reproducing characteristics, particularly, jitter as the optical disk.

For the improvement of the recording/reproducing performance of the optical disk, less discussion has been made so far taking notice on the hardness of the reflective layer and the physical property values of other constituent portions, or taking notice of the respective physical property values for the peeling between both of the substrates of optical disks having the bonded structure, not only in view of the strength of the adhesive layer but also including relations with other constituent portions.

The present invention intends, at first, to provide an optical information recording medium capable of providing high reflectance and high heat conductivity while sufficiently improving the hardness by an alloy film with addition of a micro amount of additive elements for the reflective layer without lowering the reflectance and the heat conductivity, and capable of obtaining recording/reproducing characteristics also for a silver alloy film, which are equal with or superior to those of a pure silver film.

The invention intends, secondly, to provide an optical information recording medium capable of reducing the thickness of a reflective layer due to sufficient hardness of the reflective layer and capable of improving the productivity and the reducing the cost.

The invention intends, thirdly, to provide an optical information recording medium capable of coping with the increasing recording operation speed, improving the recording/reproducing performances, particularly, initial jitter, and obtaining high reliability (high temperature resistance and high humidity resistance test reliability, or humidity resistance reliability).

In order to attain the foregoing subjects, the present invention provides, in a first aspect, an optical information recording medium having each of layers including a recording layer and a reflective layer which is to be recorded or recorded on one main surface of a transparent substrate in which at least a reproducing light of a recording light or the reproducing light can be entered on the other main surface of the transparent substrate, wherein the reflective layer has a metal film containing a phosphorus ingredient and wherein the phosphorous ingredient is added by 0.05 to 0.15% by weight to the metal film.

In a preferred embodiment of the invention, the reflective layer has a hardness property of 60 mgf/µm² or more as a nano indentation hardness.

In another embodiment, the dye recording layer has such a dissolving property of the dye to water that absorption of hot water at a maximum absorption wavelength is 0.2 or less when the dye of the dye recording layer coated on a polycarbonate substrate of 2.5 cm square is dipped in 5 ml of hot water at 75°C for 60 min.

Further, the invention provides, in another aspect, an optical information recording medium including a pair of transparent substrates opposed to each other, having each of layers including a dye recording layer and a reflective layer which is to be recorded or recorded on at least one of opposed main surfaces thereof, in which the opposed surfaces are bonded by way of an adhesive layer, and at least a reproducing light of a recording right and the reproducing light can be entered to the main surfaces on the opposite sides of the respective transparent substrates, wherein the reflective layer has a metal film containing a phosphorus ingredient and the reflective layer has a hardness property of 60 mgf/µm²or more as a nano indentation hardness and wherein the phosphorous ingredient is added by 0.05 to 0.15% by weight to the metal film.

In a preferred embodiment for another aspect of the invention, the adhesive layer has a temperature property for the modulus of elasticity that the glass transition temperature is 100°C or higher and 200°C or lower in view of the change of the modulus of elasticity relative to the temperature.

In an another embodiment, the modulus of elasticity of the adhesive layer at 25 to 80°C is preferably 1000 MPa or more.

In a further embodiment, the dye recording layer preferably has such a dissolving property of the dye to water that absorption of hot water at a maximum absorption wavelength is 0.2 or less when the dye of the dye recording layer coated on a polycarbonate substrate of 2.5 cm square is dipped in 5 ml of hot water at 75°C for 60 min.

In a further embodiment, the adhesive layer preferably has such an adhesion strength property that a load value just before peeling of the pair of transparent substrates from each other is 4 N or more, in a case where the paired substrates are formed each into a disk (240 mm diameter, 0.6 mm thickness) each of the layer being formed thereof and are opposed and bonded to each other way of the adhesive layer, a rigid thin film metal piece is inserted in a gap between both of the pair of transparent substrates at the inner circumference thereof, and a load is applied only to the lower portion while fixing the upper portion.

According to the invention, since the reflective layer having the metal film containing the phosphorus ingredient is provided, high reflectance, high heat conductivity, and high hardness can be maintained for the reflective layer thereby capable of providing an optical information coping with the increasing recording speed, capable of improving the recording/reproducing performances, particularly, initial jitter by the improvement of the heat dissipation due to the high heat conductivity, as well as capable of obtaining high reliability (high temperature resistance, high humidity resistance test reliability or humidity resistivity reliability) by preventing the flow of the dye recording layer due to the hardness of the reflective layer. Further, it is possible to provide an optical information recording medium capable of having high reflectance and high heat conductivity while sufficiently improving the hardness due to the alloy film with addition of a micro amount of additive elements for the reflective layer without lowering the reflectance and the heat conductivity and capable of obtaining recording/reproducing characteristics comparable with or superior to those of a pure silver film also in a silver alloy film. In addition, it is possible to provide an optical information recording medium capable of reducing the thickness of the reflective layer due to the improvement of the hardness for the reflective layer and capable of improving the productivity and reducing the cost.

### PREFERRED EMBODIMENT OF THE INVENTION

In the present invention, the optical information recording medium includes any of bonded type optical disks using only the optical laser light for recording and reproduction and using an opto-magnetic recording/reproducing system.

For example, the optical information recording medium includes, specifically, bonded type optical disks, formed by opposing an optical disk in which a dye recording layer, a metal reflective layer formed thereon, and a protective layer formed optionally further thereon are disposed on one main surface of a transparent substrate and a peelable protective layer is disposed optionally on the other main surface and another optical disk in which all of the dye recording layer, the reflective layer and the optional protective layer (for example, of UV-curable resin) are disposed in the same manner, or an optical disk in which a portion of the dye recording layer, the reflective layer and the protective layer is not disposed and other layers are disposed in the same manner, on the side of the main surface provided with each of the layers; or opposing any one of the optical disks described above and another optical disk configurated in the same manner as described above except for previously forming tracking guide grooves to the transparent substrate and disposing a dye recording layer thereon, on the sides of the main surfaces provided with respective dye recording layers; or opposing any one of the optical disks described above and another transparent substrate, and bonding them by way of an adhesive layer, respectively. For recording or reproducing information to and from them, a recording light or a reproducing light is entered on the side from which the protection film is peeled or directly on the side in a case where the protective film is not disposed. Generally, in a case of using a laser light as a reproducing light, a semiconductor laser light at a wavelength of 400 to 670 nm is used for DVD ± R or at a wavelength of 770 to 830 nm is used for CD-R, but other laser lights may also be used.

While the recording layer has the dye recording layer in the case described above, a read only optical disk such as CD is also available, in which the dye recording layer is not present, recording is conducted to the transparent substrate per se, and a reflective layer and a protective layer are successively stacked thereover. In this optical disk, a reproducing light is incident to the transparent substrate on the side opposite to the recorded site and information can be reproduced by row of recording pits formed on the transparent substrate and a reflective layer covering them. Also this optical disk can be used in the same manner as described above as one of optical disks in the bonded type optical disk.

In addition to the dye recording layer and the reflective layer, other layers, for example, a layer for improving the bondability between the layers described above and other adjacent layers, an oxygen impermeable layer comprising, for example, SiO₂ for improving the reliability in addition to information recording and, further, an antioxidation layer for preventing oxidation of the optical reflective layer may be interposed between the optical reflective layer and the protective layer.

The protective layer disposed over the reflective layer is a layer for protecting an information recorded portion against external physical or mechanical disorders and the thickness is, preferably, within a range from 5 to 10 µm. Particularly, a protective layer comprising a UV-ray curable resin that can avoid undesired effects caused by heating to the substrate or the recording layer and can be formed in a short time upon forming the protective layer is preferred.

The reflective layer has a metal film containing the phosphorus ingredient. The reflective layer is formed by adding the phosphorus ingredient to a film of a high reflectance material such as a metal film comprising an alloy of each of Au, Al, Ag, Cu, Pt, and like other element and an alloy with further addition of other micro ingredients than those described above, for example, a metal film such as a silver alloy film comprising Ag and one or plurality of elements selected from the group consisting of Pd, In, Cu, Bi, Ca, Nd, Ni, and Zn, for example, AGPdIn, AgZnCu, AgBi, AgCuPd, AgPd, AgCuCa, AgNdCu, AgCuNi, AgCuIn, AdCuZn, AgZn, AgCuBi, formed by vapor deposition, sputtering, etc. While In has an anti-sulfidation effect and Cu, Zn have an effect of improving the hardness, addition of the phosphorus ingredient can provide an appropriate hardness, and add a performance of improving the hardness, for example, for each of the silver alloy films described above. By adding the phosphorus ingredient to the metal film, for example, AgCuIn and AgCuZn, novel materials, i.e., Ag-Cu-P-In and Ag-Cu-P-Zn are obtained.

Incorporation of the phosphorus ingredient to the metal film can provide a remarkable effect to silver alloy films in a case with no addition of P, in which the heat conductivity and the reflectance are lowered due to alloying with other alloys when compared particularly with a pure silver film and can present a performance capable of preventing extreme lowering of the heat conductivity and the reflectance, as well as also presenting the performance of further improving the high hardness inherent to the alloyed silver alloy film due to alloying, and the performance of outstandingly improving the resistance to oxidation and corrosion. The improvement of the hardness can suppress or prevent the flow of the dye recording layer contrary to the case of the pure silver film which is excessively soft and can not completely suppress the flow of the dye recording layer disposed therebelow, and can improve the recording/reproducing characteristics, particularly, initial jitter in the optical disk by suppressing or preventing the flow of the dye recording layer, and increasing the heat dissipation while taking advantage of the high heat conductivity and high reflectance inherent to the pure silver film.

The phosphorus ingredient is added by 0.05 to 0.15% by weight to the elemental metal or the metal in the alloy (Ag, Cu, Zn, etc.) (may be from 0.05 to 0.15% weight based on the base metal). Below the lower limit, no sufficient hardness can be obtained and, on the other hand, above the upper limit, lowering of the reflectance and lowering of the heat conductivity may sometimes occur due to the increase of the addition amount.

As the addition amount of the phosphorus ingredient, a metal film such as of alloy is formed by sputtering or vapor deposition under the presence of phosphorus.

The reflective layer preferably has the following property (a).
(a) Hardness property of 60 mgf/µm² or more as the nano indentation hardness

The hardness of the reflective layer is particularly preferably 100 mgf/µm² or more. In a case where the hardness of the reflective layer is less than 60 mgf/µm², the reliability (suppression for the worsening of recording characteristics caused by the dissolving property of the dye), can not sometimes be improved. The hardness of the reflective layer can be controlled depending on the composition of the alloy and, particularly, it is from 60 to 200 mgf/µm² and, preferably, from 100 to 170 mgf/µm². At a lower hardness, fluidization of the dye recording layer can not be suppressed and, at a higher hardness, lowering of the heat conductivity and lowering of the reflectance may occur sometimes due to increase in the addition amount.

The heat conductivity can also be controlled depending on the composition of the alloy and, particularly, it is from 250 to 410 W/m k and, preferably, from 300 to 400 W/m k. At a lower heat conductivity, the heat dissipation is deteriorated to possibly worsen the jitter. On the other hand, while higher heat conductivity is preferred, when it is excessively high, since the heat conductivity tends to be lowered to about 90% in a case of a silver alloy compared with pure silver by the addition of another element even in a extremely smaller amount, it is preferably 380 W/m k or less.

The reflectance can also be controlled depending on the composition of the alloy and, particularly, it is 93% or more and, preferably, 95% or more. At a lower reflectance, the reflectance of the medium (optical information recording medium) is also lowered to sometimes deteriorate the characteristics. Further, while higher reflectance is better, it is actually at about 98%.

Further, it is preferred to have the following property (b).
(b) Dissolving property of the dye to water that the absorption of hot water is 0.2 or less at the maximum absorption wavelength when a polycarbonate substrate of 2.5 cm square coated with a dye of a dye recording layer thereon is dipped in 5 ml of hot water at 75°C for 60 min.

(b) shows the dissolving property of the dye to water and in a case where the absorption is 0.2 or less, preferably, 0.15 or less and, more preferably, 0.1 or less, a uniform and high density continuous thin film can be formed easily when the solution is coated to form a dye recording layer, and highly fine recording is possible to the dye recording layer, which is suitable also to high speed recording.

As the dye capable of having the property (b), trimethine cyanine, etc. can be used preferably and specific products include NK-5134, NK-5907, NK-4741, and NK-4413.

The adhesive layer for the bonding preferably has the following property (c) and, more preferably, the following property (d) after drying or after curing.
(c) Temperature property of the modulus of elasticity that the glass transition temperature is 100°C or higher and 200°C or lower in view of the change of the modulus of elasticity relative to the temperature.
(d) Elasticity modulus property that the modulus of elasticity is at least 1000 MPa at 25 to 80°C.

The upper limit for (d) is defined as 5000 MPa. At a higher value, problems may possibly occur for the peeling between both of the substrates failing to obtain a desired adhesive strength. Further, in a case where it is lower than 1000 MPa, the humidity resistance reliability and the initial jitter are worsened. In view of the above, it is more preferably at least 1400 MPa, by which reliable humidity resistance reliability is provided and the initial jitter is improved.

The modulus of elasticity relative to the temperature (stress per unit elongation) shows a large rate of change in the course of transition from a glassy state to a rubbery state and can be distinguished by the large rate of change from the glassy state or rubbery state showing small rate of change. A glass transition temperature exists within a temperature range corresponding to the curve of change in a range showing large rate of change, which is indicated by Tg.

With a view point of the dynamic viscoelasticity, while the dynamic storage modulus (G') representing the magnitude of the elastic factor of a polymer lowers along with increase of the temperature. While G' for a thermoplastic resin lowers continuously also in a rubbery region, (G') for a crosslinked type polymer does not lower continuously in the rubber region but it remains flat or increases. On the other hand, a relation between the dynamic loss modulus (G") representing the magnitude of the viscosity factor of a polymer and the temperature is indicated by a curve having a maximal point. Further, a dynamic loss (loss tangent) tan δ (δ is a phase difference between the strength and the strain vector) can be measured based on the phase difference between the stress and the simple harmonic oscillation of strains, which is a scale representing the extent for the loss of the dynamic energy given to the system due to the heat generation. The temperature showing peak value for tan δ in curve G' is Tg (glass transition temperature) in dynamic measurement, which may be considered as a glass transition temperature Tg. The Tg can be made higher by increasing the crosslinking density or designing a polymer of higher nuclear structural density such as a phenyl nuclei. The Tg can be lowered by lowering the crosslinking density or by introducing, for example, an alkyl chain of a fatty acid to the polymer, or mixing of a plasticizer. For the details, "Modern dye Dispersion Technique" (p 53 to 54, para. 2.1, published in 1993 from Technical Information Society) can be referred to.
(d) is preferably the following (d)'.
(d)' Modulus of elasticity can be 2500 MPa or more (particularly, 3000 MPa or more) and 5000 MPa or less at 25°C, and 1000 MPa or more (particularly, 2000 MPa or more) and 5000 MPa or less at 80°C. In a case where it is lower than the lower limit, problems may occur on the humidity resistance reliability or the jitter. On the other hand, when it is higher than 5000 MPa, it may result in a problem that the adhesion strength is insufficient.

In this case, since the modulus of elasticity is optimized at 25°C and 80°C respectively, a reliable humidity resistance reliability can be provided due to the synergistic effect of the optimization and the initial jitter can also be improved. Particularly, also in a case where the dye is highly water soluble, the effect can be provided reliably and can cope also with the increasing recording speed suitably.

In view of the properties (c) and (d) above, curing products of UV-ray curable resin composition used so far as the adhesives for the bonding do not show so high Tg as 100°C and so large modulus of elasticity as 1000 MPa or more at 25 to 85°C, and the modulus of elasticity at each temperature (d)' is not so large as in the respective values described above. On the other hand, since the adhesive layer according to the invention can selectively use the adhesives having the properties of (c) and (d) (particularly, (d)'), it less suffers from the effect of the humidity and can be suppressed from deformation, the initial jitter and the humidity resistance reliability in the optical disk can be free of deterioration.

The adhesive layer more preferably has the following property (e) in addition to the properties (c) and (d).
(e) Adhesion strength property of the adhesive layer that the load value just before peeling of the pair of transparent substrates from each other is 4N or more, in a case where the paired substrates formed each into a disk of 240 mm diameter and 0.6 mm thickness and formed with each of the layers are bonded by way of an adhesive layer, a thin film metal piece is inserted in a gap between the pair of transparent substrates at the inner circumference thereof, and a load is applied only to the lower portion.

The adhesive strength (e) is 4N or more and, particularly preferably, 7N or more. In a case where it is less than 4N, the adhesion strength is insufficient and peeling may sometimes occur between both of the substrates even by merely taking the bonded optical disk out of the containment case.

As described above, among (a) to (e), a plurality of characteristics including (a) may be satisfied. By satisfying most of them, particularly, satisfying all of them, the initial jitter or the humidity resistance reliability as the optical disk can further be improved due to the synergistic effect of optimizing the performance of the reflective layer , water solubility of the dye, the glass transition temperature, the modulus of elasticity, and the adhesion strength of the adhesive. Further, this can provide a bonded structure free of peeling upon taking the optical disk out of the storage case.

The adhesive capable of having the properties (c) to (e) described above may either be a non-curable or curable type. The curable type may be a thermosetting type (also including normal temperature setting type) and also includes UV-ray curable resin compositions. (meth)acrylic resin composition may be mentioned for each of them. The UV-ray curable resin compositions comprise, for example, light sensitive prepolymers (for example, those in which double bonds are introduced in a polymer such as polyester resin), photo-polymerization initiators, reactive diluents (for example, unsaturated monomer such as polyfunctional acrylate monomer) (thermosetting type adhesive may be obtained by using a heat polymerization catalyst instead of the photo-polymerization initiator) and include, for example, SD-694 (manufactured by Dai-Nippon Ink Chemical Industry Co.). The glass transition temperature of the curing product and the modulus of elasticity at each of the temperatures of the composition can be controlled by introducing aromatic rings to the light sensitive prepolymer, increasing the density of double bonds, or selecting the type and the amount of use of the reactive diluent, or the adhesion to the substrate can be improved by introducing functional groups to the light sensitive prepolymers or selecting the kind and the amount of use of the reactive diluents to provide the properties (c) to (e) described above. The adhesive layer is formed by coating an adhesive to one of the optical disks on the side formed with each of the layers by a spin coat method or the like and stacking the other of the optical disks on the side formed with each of the layers or the substrate and by irradiating UV-rays from the opposite side for curing.

In the invention for the transparent substrate, a resin of a material having a high transparency with a refractive index to a laser light in a range from 1.4 to 1.6 and excellent in the impact resistance is used. Specifically, it is formed by injection molding or like other means using a resin such as a polycarbonate, polyolefin, and acryl resin. In this case, tracking guide means of spiral or other shape of guide grooves may be formed. Such tracking guide means can be formed usually by a known method using a stamper.

Further, the protective film includes, for example, films of polyester, nylon, acetate, or polyolefin such as polyethylene. The film preferably has a thickness, for example, of about 100 µm. Various other materials such as epoxy materials and acrylic materials may also be considered and acrylic materials are preferred among them.

### [Example]

The present invention is to be described by way of examples.

### Example 1

Two polycarbonate substrates each of 120 mmφ outer diameter, 15 mmφ inner diameter, and 0.6 mm thickness in which guide grooves of 0.3 µm width, 0.16 µm depth, and 0.74 µm of track pitch were formed in a diametrical range from 46 to 117 mm for conducting spiral tracking guide by a stamper (Yubiron: manufactured by Mitsubishi Gas Chemical Co.) were provided. The hardness of the substrate was a pencil hardness HB (using Mitsubishi Pencil) and a heat expansion coefficient thereof was 6 x 10.5/°C at 20 to 120°C.

0.65 g of a dye(NK-4624, manufactured by Nippon Kanko Shikiso Kenkyusho) was dissolved in 10 ml of diacetone alcohol, which was spin coated to the polycarbonate substrate on the side formed with the guide grooves while properly changing the number of rotation such that the average film thickness was within a range from 40 to 60 nm and dried to form a dye recording layer.

For the dye, when the light absorption (b) described above showing the dissolving property of the dye was previously measured, it was 0.1. In the measurement, the dye solution described above was coated on a polycarbonate substrate of 2.5 cm square (1 mm thickness) by a spin coat method to form a dye recording layer of 100 nm thickness, which was used as a test specimen. Hot water at 75°C was poured by 5 mL to 50 cc beaker and the test specimen was dipped while keeping the temperature at 75°C and kept for 60 min. Then, the test specimen was removed, the colored hot water was cooled to a normal temperature and the light absorption was measured by a spectrophotometer (manufactured by Hitachi Ltd.).

A reflective layer of 130 nm thickness comprising an alloy film of Ag-Cu-P-Zn (0.79% by weight of total addition, amount based on Ag, of elements other than Ag, 0.5% by weight of Cu, 0.09% by weight of P, and 0.2% by weight of Zn) was formed on the dye recording layer under the presence of P (phosphorus) by a sputtering method of forming a film for each of the alloy ingredients. The composition of the film is shown in Table 1.

Then, unnecessary portions for the dye recording layer and the reflective layer were removed and a dual layer of the dye recording layer and the reflective layer was formed concentrically within a diametrical range of from 42 to 118 mmφ.

The thus obtained optical disks were manufactured by two and an adhesive comprising a (meth)acrylic UV-curable resin composition (SD-694, manufactured by Dai-Nippon Ink Chemical Co.) was coated to one of the optical disks on the side formed with each of layers such as a dye recording layer, and the other optical disk was opposed and stacked on the side formed with each of the layers such as the dye recording layer, UV-rays were irradiated by a high pressure mercury lamp at 230 mJ/cm² to cure the adhesive and form an adhesive layer of 40 µm thickness. Thus, the bonded optical disk was obtained.

For the bonded optical disk, EMF signals were recorded at a line speed of 41.9 m/sec (recording at 12 times speed) by using an optical disk evaluation device manufactured by Pulse Tech Industry Co. (DDU-1000) mounting a semiconductor laser (NA (number of aperture) = 0.65). After recording when signals were reproduced to measure the reflectance, the modulation degree, and the PI error, all of them were satisfactory and when the jitter was measured, it was 7.1 %, Table 1 shows the measured jitter value. Further, as a result of conducting a humidity resistance reliability test (jitter was measured after keeping the disk in a thermostable bath at 80°C, 80% RH for 400 hours and evaluated such that those recognized for no jitter change were indicated as favorable (O) and those recognized for distinct change as failure (x) before and after the start of the test), they were satisfactory. The results are shown in Table 1. The evaluation criterion for failure (x) was 13% or more for the jitter and 280 or more for PI error.

For examining the physical property of the reflective layer, the nano indentation hardness (a) described above, was measured by forming a film at a thickness of 130 nm by a sputtering method on a polycarbonate substrate to measure the hardness (mgf/µm²) by a micro hardness measuring device (Elionix ENT-1 100a). Further, for the reflectance of the reflective layer, it was measured by forming a film at a thickness of 130 nm by a sputtering method on a glass substrate and the reflectance (%R) at a wavelength of 660 nm by a spectrophotometer (U-4000, manufactured by Hitachi Ltd.). Further, for the heat conductivity of the reflective layer, it was measured by forming a film at a thickness of 130 nm on a glass substrate by a sputtering method, measuring the electric resistivity and then determining the heat conductivity (W/m·k) by a Wiedman-Franz method. The results are shown in Table 1. In view of the result in Table 1, by the incorporation of P, a sufficient hardness at about 110 mgf/µm² can be obtained even when the addition amount of other metals (Cu, In, Zn, etc.) is decreased. Since the amount of additive elements is small, high reflectance and high thermal conductivity approximate to those of pure silver can be obtained and, as a result, the humidity resistance reliability is favorable and the jitter rate at 12 times speed is also lowered and satisfactory.

### Example 2, Comparative Examples 1 to 4

A bonded optical disks were manufactured by using same dye, adhesives and substrates as those in Example 1 except for using alloy films of compositions shown in Table 1. Further, reflective layers of the alloy film and silver film were formed for measuring the physical property in the same manner as in Example 1 and they were measured in the same manner as in Example 1. The results are shown in Table 1.

### Examples 3, 4

Bonded optical disks were manufactured in the same manner as in Example 1 except for using those of physical properties shown in Table 2 for the adhesive layer and measurement was conducted also in the same manner as in Example 1. The results are shown in Table 2.

Further, when the characteristics (e) described above were examined for each of the bonded optical disks, the adhesion strength (peeling strength) was as shown in Table 2 and the optical disks were peeled as they were. In the measurement, after inserting a rigid iron piece of 0.1 mm thickness into a gap at the inner circumference between both of the substrates and gripping and fixing the upper substrate at the periphery thereof, load was applied to the iron piece (each by 10g), and the load just before the peeling of the both substrates was read.

Further, the same adhesive layer as described above was prepared by using SD-694 and irradiating UV-rays in the same manner as described above to obtain test specimens, and the physical property values (c), (e) described above were determined by measuring the temperature dispersion behavior of the module of elasticity by a dynamic viscoelastic method. A specific measurement was conducted in accordance with JIS-K6251. The results are shown in Table 2.

### Comparative Examples 5 to 9

Bonded optical disks were manufactured in the same manner as in Comparative Example 3 except for using those of the physical property shown in Table 2 for the adhesive layer and measurement was conducted also in the same manner as in Example 1. The results are shown in Table 2.

Table 2 also shows the results of determining the physical property values (c), (d), (e) described above in the same manner as in Examples 3 and 4.
For the water solubility of the dye, the absorption was 0.1 in the examples and the comparative examples.

**[Table1]**

| | Example | | Comparative Example | | | |
|---|---|---|---|---|---|---|
| | 1 | 2 | 1 | 2 | 3 | 4 |
| Film composition of reflection layer | Ag-Cu-P-Cu | Ag-Cu-P-In | Ag | Ag-Cu-Pd | Ag-Cu-Zn | Ag-Cu-Nd |
| Addition amount of elements other than Ag (wt% based on Ag) | Cu: 0.5 | Cu: 0.5 | P none | Cu: 1.0 | Cu: 1.0 | Cu: 1.0 |
| | P: 0.09 | P: 0.09 | | Pd:1.0 | Zn: 1.0 | Nd: 1.0 |
| | Zn: 0.2 | Zn: 0.2 | | P: none | P: none | P: none |
| Total addition amount other than Ag (wt%) | 0.79 | 0.79 | 0 | 2.0 | 2.0 | 2.0 |
| Hardness (mgf/µm²) | 112 | 109 | 57 | 115 | 120 | 133 |
| Reflectance (%R) | 97 | 97 | 98 | 95 | 95 | 95 |
| (wavelength: 660 nm) | | | | | | |
| Heat conductivity (W/m·k) | 330 | 315 | 410 | 295 | 290 | 145 |
| Humidity resistant reliability test | ○ | ○ | × | ○ | ○ | ○ |
| Initial jitter (%) (12 times speed) | 7.1 | 7.2 | 7.0 | 7.7 | 7.7 | 8.5 |

**[Table 2]**

| | | Example | | Comparative Example | | | | |
|---|---|---|---|---|---|---|---|---|
| | | 3 | 4 | 5 | 6 | 7 | 8 | 9 |
| Glass transition temperature (Tg) (°C) | | 180 | 196 | 180 | 180 | 100 | 80 | 150 |
| Modulus of elasticity (MPa) | 25°C | 3200 | 3500 | 3200 | 3200 | 1300 | 1500 | 2000 |
| | 80°C | 2100 | 2000 | 2100 | 2100 | 460 | 1000 | 800 |
| Humidity resistance reliability test | | ○ | ○ | ○ | ○ | × | × | × |
| Initial jitter (%) (12 time speed) | | 7.1 | 7.2 | 7.7 | 7.0 | 8.35 | 8.7 | 8.17 |
| Adhesion strength (N) (peeling strength) | | 7 | 11.1 | 7 | 11.1 | 9.1 | 12.7 | 9.5 |

## Claims

1. An optical information recording medium having each of layers including a recording layer and a reflective layer which is to be recorded or recorded on one main surface of a transparent substrate in which at least a reproducing light of a recording light or the reproducing light can be entered on the other main surface of the transparent substrate, wherein the reflective layer has a metal film containing a phosphorus ingredient, **characterised in that** the phosphorous ingredient is added by 0.05 to 0.15% by weight to the metal film.

2. An optical information recording medium according to claim 1, wherein the reflective layer has a hardness property of 60 mgf/µm² or more as a nano indentation hardness.

3. An optical information recording medium according to claim 1 or 2, wherein the dye recording layer has such a dissolving property of the dye to water that absorption of hot water at a maximum absorption wavelength is 0.2 or less when the dye of the dye recording layer coated on a polycarbonate substrate of 2.5 cm square is dipped in 5 ml of hot water at 75°C for 60 min.

4. An optical information recording medium including a pair of transparent substrates opposed to each other and having each of layers including a recording layer and a reflective layer which is to be recorded or recorded on at least one of opposed main surfaces thereof, in which the opposed surfaces are bonded by way of an adhesive layer, and at least a reproducing light of a recording right and the reproducing light can be entered to the main surfaces on the opposite sides of the respective transparent substrates, wherein the reflective layer has a metal film containing a phosphorus ingredient and the reflective layer has a hardness property of 60 mgf/µm² or more as a nano indentation hardness, **characterised in that** the phosphorous ingredient is added by 0.05 to 0.15% by weight to the metal film.

5. An optical information recording medium according to claim 4, wherein the adhesive layer has such a temperature property for the modulus of elasticity that the glass transition temperature is 100°C or higher and 200°C or lower in view of the change of the modulus of elasticity relative to the temperature.

6. An optical information recording medium according to claim 5, wherein the modulus of elasticity of the adhesive layer at 25 to 80°C is 1000 MPa or more.

7. An optical information recording medium according to claim 4, wherein the dye recording layer has such a dissolving property of the dye to water that absorption of hot water at a maximum absorption wavelength is 0.2 or less when the dye of the dye recording layer coated on a polycarbonate substrate of 2.5 cm square is dipped in 5 ml of hot water at 75°C for 60 min.

8. An optical information recording medium according to claim 4 or 7, wherein the adhesive layer has such an adhesion strength property that a load value just before peeling of the pair of transparent substrates from each other is 4 N or more, in a case where the paired substrates are formed each into a disk (240 mm diameter, 0.6 mm thickness) with each of the layers being formed thereto and are opposed and bonded to each other way of the adhesive layer, a rigid thin film metal piece is inserted in a gap between both of the pair of transparent substrates at the inner circumference thereof, and a load is applied only to the lower portion while fixing the upper portion.

## Patentansprüche

1. Optisches Informationsaufzeichnungs- bzw. speichermedium, das jede der Schichten einschließlich einer Aufzeichnungs- bzw. Speicherschicht und einer reflektierenden Schicht aufweist, auf das aufzuzeichnen ist oder auf das auf einer Hauptfläche bzw. -oberfläche eines transparenten Substrats aufgezeichnet ist, bei dem wenigstens ein Reproduzierungslicht eines Aufzeichnungs- bzw. Speicherlichts oder ein Reproduzierungslicht auf die andere Hauptoberfläche bzw. -fläche des transparenten Substrats eingebracht werden kann, wobei die reflektierende Schicht einen Metallfilm aufweist, der einen phosphorhaltigen Bestandteil enthält, **dadurch gekennzeichnet, dass** der phosphorhaltige Bestandteil zu 0,05 bis 0,15 Gewichtsprozent dem Metallfilm hinzugefügt wird.

2. Optisches Informationsaufzeichnungsmedium nach Anspruch 1, wobei die reflektierende Schicht eine Härteeigenschaft von 60 mgf/µm² oder mehr als Nano-Eindruckhärte aufweist.

3. Optisches Informationsaufzeichnungsmedium nach Anspruch 1 oder 2, wobei die Farbstoffaufzeichnungsschicht eine derartige Lösungseigenschaft des Farbstoffs gegenüber Wasser aufweist, dass eine Absorption von heißem Wasser bei einer maximalen Absorptionswellenlänge 0,2 oder weniger ist, wenn der Farbstoff der Farbstoffaufzeichnungsschicht, die auf ein Polycarbonatsubstrat von 2,5 cm² geschichtet ist, 60 Minuten lang in 5 ml heißes Wasser von 75°C getaucht wird.

4. Optisches Informationsaufzeichnungs- bzw. speichermedium, das ein Paar transparenter Substrate enthält, die zueinander entgegengesetzt sind, und jede der Schichten einschließlich einer Aufzeichnungs- bzw. Speicherschicht und einer reflektierenden Schicht aufweist, auf das aufzuzeichnen ist oder auf das wenigstens auf einer von entgegengesetzten Hauptflächen bzw. - oberflächen davon aufgezeichnet ist, bei dem die entgegengesetzten Flächen bzw. Oberflächen mittels einer Haftschicht gebondet sind und wenigstens ein Reproduzierungslicht eines Aufzeichnungs- bzw. Speicherlichts und das Reproduzierungslicht auf die Hauptoberflächen bzw. -flächen der entgegengesetzten Seiten der jeweiligen transparenten Substrate eingebracht werden können, wobei die reflektierende Schicht einen Metallfilm aufweist, der einen phosphorhaltigen Bestandteil enthält und die reflektierende Schicht eine Härteeigenschaft von 60 mgf/µm² oder mehr als Nano-Eindruckhärte aufweist, **dadurch gekennzeichnet, dass** der phosphorhaltige Bestandteil zu 0,05 bis 0,15 Gewichtsprozent dem Metallfilm hinzugefügt wird.

5. Optisches Informationsaufzeichnungsmedium nach Anspruch 4, wobei die Haftschicht eine derartige Temperatureigenschaft für das Elastizitätsmodul aufweist, dass die Glasübergangstemperatur 100°C oder höher und 200°C oder niedriger ist hinsichtlich der Änderung des Elastizitätsmoduls relativ zu der Temperatur.

6. Optisches Informationsaufzeichnungsmedium nach Anspruch 5, wobei das Elastizitätsmodul der Haftschicht bei 25 bis 80°C 1000 MPa oder mehr ist.

7. Optisches Informationsaufzeichnungsmedium nach Anspruch 4, wobei die Farbstoffaufzeichnungsschicht eine derartige Lösungseigenschaft des Farbstoffs gegenüber Wasser aufweist, dass eine Absorption von heißem Wasser bei einer maximalen Absorptionswellenlänge 0,2 oder weniger ist, wenn der Farbstoff der Farbstoffaufzeichnungsschicht, die auf ein Polycarbonatsubstrat von 2,5 cm² geschichtet ist, 60 Minuten lang in 5 ml heißes Wasser von 75°C getaucht wird.

8. Optisches Informationsaufzeichnungsmedium nach Anspruch 4 oder 7, wobei die Haftschicht eine derartige Haftfestigkeitseigenschaft aufweist, dass ein Lastwert kurz vor dem Ablösen des Paars transparenter Substrate voneinander 4 N oder mehr ist, und zwar in einem Fall, in dem die gepaarten bzw. paarweise angeordneten Substrate jeweils in bzw. zu einer Scheibe (240 mm Durchmesser, 0,6 mm Dicke) gebildet bzw. geformt werden, wobei jede der Schichten mit dazu gebildet wird, und einander entgegengesetzt sind und mittels der Haftschicht einander gebondet werden, ein starres Dünnschichtmetallstück in einen Spalt zwischen beiden des Paars transparenter Substrate an deren Innenumfang eingesetzt wird und eine Last nur an den unteren Abschnitt angebracht wird, während der obere Abschnitt fixiert wird.

## Revendications

1. Support d'enregistrement optique de données comportant chacune des couches comprenant une couche d'enregistrement et une couche réfléchissante qui doit être enregistré ou est enregistré sur une surface principale d'un substrat transparent, dans lequel on peut faire entrer au moins une lumière de reproduction d'une lumière d'enregistrement ou la lumière de reproduction sur l'autre surface principale du substrat transparent, dans lequel la couche réfléchissante comporte un film de métal contenant un ingrédient phosphore, **caractérisé en ce que** l'ingrédient phosphoreux est ajouté par 0,05 à 0,15 % en poids au film de métal.

2. Support d'enregistrement optique de données selon la revendication 1, dans lequel la couche réfléchissante présente une propriété de dureté de 60 mgf/µm² ou plus en tant que dureté à la nano-indentation.

3. Support d'enregistrement optique de données selon la revendication 1 ou 2, dans lequel la couche d'enregistrement à colorant présente une telle propriété de dissolution du colorant à l'eau que l'absorption d'eau chaude à une longueur d'onde d'absorption maximale est de 0,2 ou moins lorsque le colorant de la couche d'enregistrement à colorant appliquée sur un substrat en polycarbonate de 2,5 cm² est immergé dans 5 ml d'eau chaude à 75°C pendant 60 minutes.

4. Support d'enregistrement optique de données comprenant une paire de substrats transparents opposés l'un à l'autre et comportant chacune des couches comprenant une couche d'enregistrement et une couche réfléchissante qui doit être enregistré ou est enregistré sur au moins l'une des principales surfaces opposées de ceux-ci, dans lequel les surfaces opposées sont collées par l'intermédiaire d'une couche adhésive et on peut faire entrer au moins une lumière de reproduction d'une lumière d'enregistrement et la lumière de reproduction jusqu'aux surfaces principales sur les faces opposées des substrats transparents respectifs, dans lequel la couche réfléchissante comporte un film de métal contenant un ingrédient phosphore et la couche réfléchissante présente une propriété de dureté de 60 mgf/µm² ou plus en tant que dureté à la nano-indentation, **caractérisé en ce que** l'ingrédient phosphoreux est ajouté par 0,05 à 0,15 % en poids au film de métal.

5. Support d'enregistrement optique de données selon la revendication 4, dans lequel la couche adhésive présente une telle propriété de température pour le module d'élasticité que la température de transition vitreuse est de 100°C ou plus et de 200°C ou moins étant donné le changement du module d'élasticité en fonction de la température.

6. Support d'enregistrement optique de données selon la revendication 5, dans lequel le module d'élasticité de la couche adhésive à 25 à 80°C est de 1000 MPa ou plus.

7. Support d'enregistrement optique de données selon la revendication 4, dans lequel la couche d'enregistrement à colorant présente une telle propriété de dissolution du colorant à l'eau que l'absorption d'eau chaude à une longueur d'onde d'absorption maximale est de 0,2 ou moins lorsque le colorant de la couche d'enregistrement à colorant appliquée sur un substrat en polycarbonate de 2,5 cm² est immergé dans 5 ml d'eau chaude à 75°C pendant 60 minutes.

8. Support d'enregistrement optique de données selon la revendication 4 ou 7, dans lequel la couche adhésive présente une telle propriété de force d'adhérence qu'une valeur de charge juste avant le décollement de la paire de substrats transparents l'un de l'autre est de 4 N ou plus, dans un cas où les substrats appariés sont mis chacun sous la forme d'un disque (240 mm de diamètre, 0,6 mm d'épaisseur) avec chacune des couches y étant formées et sont opposés et collés l'un à l'autre par l'intermédiaire de la couche adhésive, un mince morceau de métal pelliculaire rigide est inséré dans un espace entre les deux substrats de la paire de substrats transparents au niveau de la circonférence intérieure de ceux-ci et une charge est appliquée seulement à la partie inférieure tout en fixant la partie supérieure.
